# EUROPEAN PATENT APPLICATION

(11) **EP 1 351 117 A1**
(43) Date of publication of application: **08.10.2003**
(21) Application number: 02354053.7
(22) Date of filing: 03.04.2002
(51) Int. Cl.: G06F 1/32

(54) **Data processing system and method**

(71) Applicant: Hewlett-Packard Company, Palo Alto, CA 94304 (US)
(72) Inventor: Greco, David, 38760 Varces (FR); Meynard, Olivier, 38220 Vizille (FR); Quang Do, Vincent Nguyen, 38400 Saint Martin d'Heres (FR)
(74) Representative: Lloyd, Richard Graham

(57) **Abstract**

The present invention relates to a data processing system and method having a reduced power consumption. A power context is established for each application, task, process or thread running within a computer system. The power context controls the operating conditions of the processor by, for example, reducing the frequency of the processor clock or the operating voltage of the processor. A scheduler is used to switch between threads and, in turn, between power contexts associated with the threads. The switching is performed according to the conventional priority switching of threads by an operating system. However, since each thread has an associated power context, the performance of the processor, and hence the power consumption, is varied on a time slot-by-time slot basis.

## Description

### Field of the Invention

The present invention relates to a data processing system and method and, more particularly, to such a system and method having a reduced power consumption.

### Background to the Invention

Within today's energy conscious society, manufacturers of computers are constantly striving for ways of producing more energy efficient computers. For example, efforts within the computing industry to achieve this aim partly manifest themselves in the form of computers that comply with the Advanced Configuration and Power Interface specification, revision 2.0, July 27, 2000, together with its errata. This specification defines a number of reduced power, or sleeping, states during which the computer system, rather than being mechanically turned off, assumes a mode in which the power consumption of the system, as a whole, is reduced as compared to the working state, S0. The ACPI specification also caters for various processor states C0 to C4 within the working state, each of which having an associated level of power consumption.

Further efforts to preserve power consumption can be found within, for example, the mobile computing industry in which battery powered laptop computers and the like incorporate Intel's Speedstep technology. Using this technology, the speed of operation of the processor of such a computer is varied according to whether the computer is powered by battery or powered by mains electricity. In the case of the former, the power consumption of the processor is reduced by, for example, reducing the clock speed of the processor. In the latter case, the clock speed of the processor is selected to be its maximum value.

It will be appreciated that computers can be used to perform a large variety of tasks. These tasks include, for example, data processing using spreadsheets. The spreadsheet presents a user with a graphical user interface via which very complex calculations can be established for later processing by a data processing engine. Additionally, or alternatively, the development of computer software often involves a relatively large amount of typing and editing of the text forming the source code of any computer program using an appropriate user interface. This is later followed by the usual compiling of that source code and linking any resulting object code using appropriate compilers and linkers. Compiling and linking source code is an extremely processor intensive task as compared to writing the source code using the appropriate user interface. Still further processor intensive tasks exist in the form of, for example, graphics applications, which perform 3-D rendering using techniques such as ray-tracing. Again, these tasks are extremely processor intensive and require a significant amount of computing resources to complete the task at hand.

Currently, the power management policies of computer system do not distinguish between the types of applications being executed by a computer and do not distinguish between the types of functions performed within an application. Accordingly, using Intel's Speedstep technology, in a mains power mode, the CPU will be operated at maximum capacity, that is, at its maximum clock speed and voltage, regardless of whether a thread being executed relates to a relatively low priority and low processor intensive graphical user interface function or a relatively high priority and processor intensive data processing or compilation function. Clearly, in both instances, the processor consumes substantially the same amount of power to perform widely different tasks. This represents an unnecessary waste of power.

It is an object of the present invention at least to mitigate some of the problems of the prior art.

### Summary of the Invention

Suitably, a first aspect of the present invention provides a data processing system comprising a processor operable at a selectable power consumption, preferably, by varying at least one of the clock frequency or voltage power supply level of the processor; a scheduler for assigning times slots to respective tasks of a plurality of tasks; the scheduler further comprising means for assigning an associated level of power consumption of the processor to at least one of the respective tasks; and means for varying the power consumption of the processor according to the associated level of power consumption of the at least one task.

Advantageously, the power consumption of the processor, and therefore, the system as a whole, can be varied according to the processing needs of an application, process, thread or sub-process.

Preferred embodiments provide a data processing system in which the processor is operable at a selectable power consumption by varying at least one of frequency of a processor clock signal and the power supply voltage of the processor.

It will be appreciated that some applications perform multiple tasks, each of which may require varying degrees of processor resources. Suitably, preferred embodiments provide a data processing system in which the respective tasks form part of the same application. Alternatively, or additionally, embodiments provide a data processing system in which the respective tasks form part of respective applications

A second aspect of the present invention provides a data processing system comprising memory for storing an application and a processor for executing the stored application; the processor being operable at variable levels of power consumption; and a controller for establishing a respective level of power consumption for the processor according to data associated with the application.

Preferably, embodiments provide a data processing system in which the associated data forms part of a header of the application and in which the controller reads the header when the application is loaded and sets the power consumption of the processor accordingly.

Again, embodiments can be produced in which the associated data forms part of, or relates to, a smaller executable part of the application, such as, for example, a task, process, thread, subroutine or function.

Preferably, embodiments provide a data processing system further comprising a clock generator for generating a clock signal to drive the processor and in which the controller comprises at least one of a voltage regulator for varying the power supply voltage of the processor and a clock regulator for varying at least the frequency of the clock signal.

Preferred embodiments provide a data processing system in which the controller further comprising a scheduler for assigning a time slot to the application during which the application will be executed by the processor at the respective level of power consumption.

### Brief Description of the Drawings

Embodiments of the present invention will now be described by way of example only with reference to the accompanying drawings in which:
figure 1 illustrates a computer system according to an embodiment; and
figure 2 illustrates the variation in power consumption of the computer system according to an embodiment.

### Detailed Description of the Preferred Embodiments

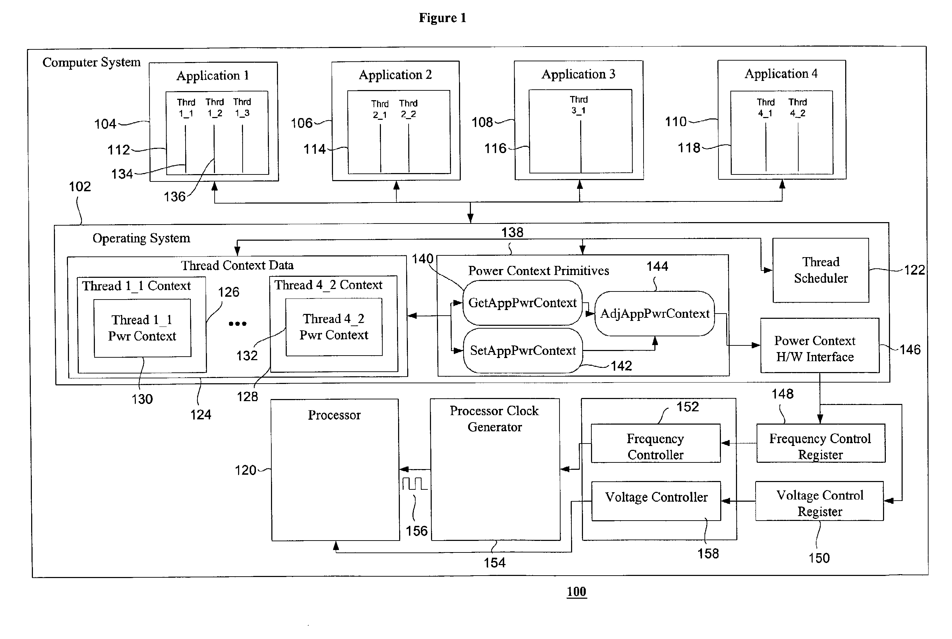

Referring to figure 1, there is shown a computer system 100 according to a first embodiment. The computer system 100 comprises an operating system 102 that is used to support the execution of various applications 104 to 110. The number of applications 104 to 110 may vary even though four applications are illustrated. Each of the applications 104 to 110 comprises a thread or a number of threads 112 to 118. The first application 104 has three illustrated threads 112. The second application 106 has two illustrated threads 114. The third application 108 has one illustrated thread 116 and the fourth application has two illustrated threads 118. Each of the threads performs respective functions. The threads are given access to processing resources such as a processor 120 via a scheduler 122 which, preferably, manages the access to the processor 120 by the threads 112 to 118 in a priority based manner. As is conventional, thread context data 124 are used by the scheduler 122 in assigning thread execution priorities. The thread context data 124 comprise, for each thread, a corresponding thread context. The thread contexts for thread 1_1 and thread 4_2 126 and 128, respectively, are illustrated. The thread contexts 126 and 128 contain, in preferred embodiments, a description or data structure of the base and relative priorities of corresponding threads.

Each thread context 126 and 128 also contains a respective thread power context 130 and 132. The thread power context contains data that provides an indication of the power requirements of a corresponding thread. For example, assuming that the first application 104 is a compiler and the first thread 134 relates to the execution of the GUI (not shown) of the compiler and the second thread 136 relates to the compilation engine of the compiler. The first thread power context 130 may be set at a relatively low level since, for the vast majority of the time, the GUI executing on the first thread 134 would be largely dormant while awaiting user input actions. In contrast, once compilation has been instigated, the second thread 136 of the first application 104 will have a relatively high thread power context setting since the task of compiling source code into object code is very processor intensive.

The thread scheduler 122, upon switching between the various threads 112 to 118 to provide access to the computer system's processing resources, saves an outgoing or terminating thread context and, in its place, loads the next thread context according to the thread priorities. Having loaded the next thread context, the thread scheduler 122 reads the corresponding thread power context using one of a number of operating system power context primitives 138. More particularly, a "*GetAppPwrContext*" primitive 140 is used to read or determine the power context of the newly loaded thread or the next thread for execution.

In preferred embodiments, the thread scheduler 122 or some other function within the operating system 102, or within the applications, may change or set the power context of an application using a "*SetAppPwrContext*" primitive 142. The "*SetAppPwrContext*" 142 may set the power context of a corresponding thread to be relative to a base power context or to be an absolute power context. The base power context may be the power context of a corresponding application. Alternatively, or additionally, the base power context may be an initially assigned power context for a thread. The use of a base power context and a dynamic power context is analogous to the base and dynamic priorities of threads as is well known within an operating system context.

A further power context primitive 144, "*AdjAppPwrContext*", is used by the thread scheduler 122 to write to a power context hardware interface port 146. The h/w interface port 146 is used to store appropriate values within a frequency control register 148 and a voltage control register 150. The frequency control register is arranged to store a data value (not shown) which causes a frequency controller 152, which, in practice, will take the form of a PLL, provides a dynamically variable frequency signal to a processor clock generator 154. The processor clock generator 154 generates, using the frequency controller signal, a clock signal 156 that is used by the processor 120 in performing and timing processor operations. It will be appreciated that varying the period of the clock signal 156 will vary the power consumption of the processor 120.

Since the value contained within the frequency control register 148 is derived from a corresponding thread power context, the power consumption of the processor, and hence the computer system 100 as a whole, varies with the thread power context 130 and 132 of the threads executed within the system.

The voltage control register 150 is used to feed a voltage controller 158. The voltage controller 158, again, influences the operation of the processor to reduce the operating voltage, V_{dd}, of the processor's power supply.

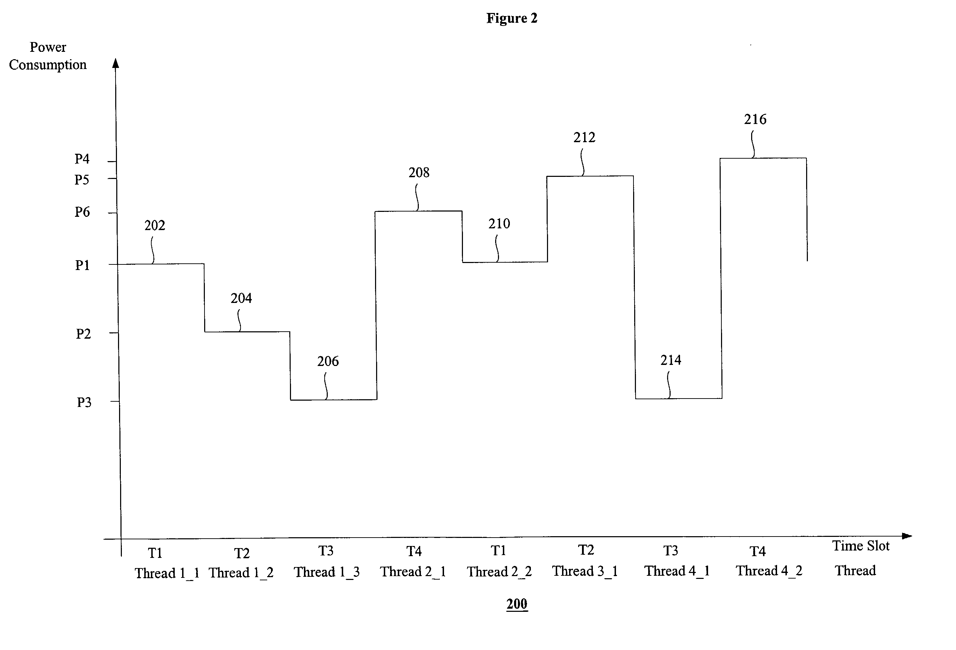

Referring to figure 2, there is shown a graph 200 of the variation in power consumption with operating system time slot or thread as the power context 130 to 132 of each of the threads 112 to 118 is used by the thread scheduler 122 to vary the power consumption of the processor 120.

During time period T1, for thread 1_1, the power consumption is set to a prescribed level 202 of P1. The threads are switched between the time slots T1 to T8 by the thread scheduler 122 according to the respective priorities of the threads in the conventional manner. The power level 204 of thread 1_2, which executes in the second time slot, is set to P2. The power level 206 of thread 1_3, which executes in the third time slot, T3, is set to a level of P3. The pattern of having an appropriate power level 206 to 216 for each of the time slots T1 to T4, which are used to execute threads 1_3 to 4_2, is also illustrated.

Using the embodiments of the present invention, the power consumption of the processor or computer system as a whole can be varied according to the processing requirements of an application or of a thread within an application.

Although the above embodiments have been described with reference to the use of power context primitives 138 and associated thread power contexts 130 and 132, the embodiments of the present invention are not limited to such arrangements. Embodiments can be realised in which the power context data is included in a header of each application or within a header of a subroutine or function of the applications.

Accordingly, when the computer system enters a period of inactivity, that is the idle task occupies a relatively large number of time slots, or enters a period during which a screen saver may be operable, the performance of the processor in executing that screen saver can be significantly reduced at least one of the frequency of the clock signal 158 generated by the processor clock generator 154 and the operating voltage, via the voltage controller 158, of the processor.

Since, during such periods of inactivity, the user is typically away from their computer or has not used the computer for a particular period of time, the user will not be affected adversely by the decrease in performance of the computer system in executing the screen saver. Furthermore, applications that contain both processor intensive and non-processor intensive routines such as, for example, GUI management and compilation respectively, can have appropriate associated power consumptions in which the processor is run at its maximum capacity for compilation and at a reduced capacity, in terms of at least one of processor clock frequency and processor operating voltage, for the less processor intensive activity.

Table 1 below illustrates a further embodiment in which an application is given access to the power context primitives to vary, on an application-by-application, task-by-task or routine-by-routine basis, the power consumption of the processor. A core or main routine is illustrated in table 1. The first instruction establishes the power consumption or processor performance to be used in executing the subsequent instructions, *instruction X*; *instruction Y*; *call ZZ* and *call YY.*

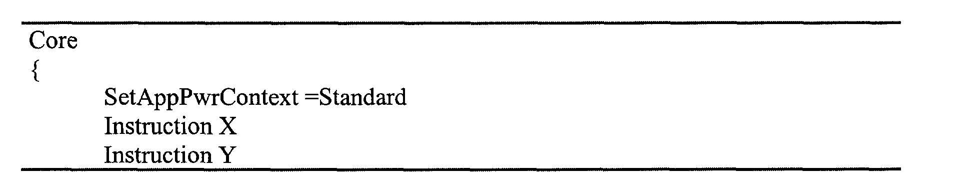

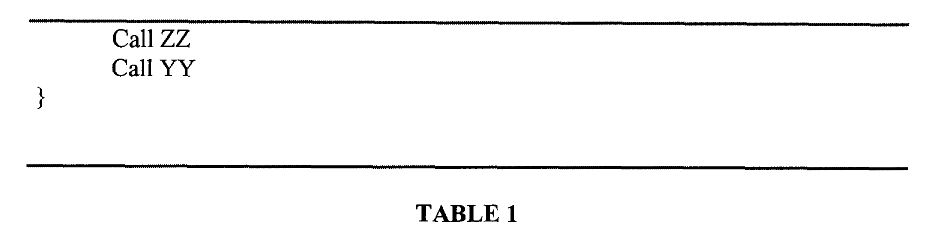

Table 2 illustrates the subroutine ZZ that was called in the above core or main routine. The first instruction, *initial_value = GetAppPowerContext*, retrieves the power context data 130 and 132 of a corresponding application or thread. The second instruction *SetAppPowerContext = LowPower*, establishes the power consumption of the sub routine to be "*LowPower*". The subsequent instructions, *instruction X, instruction Y* and *SetAppPowerContext = initial_value* are executed using a processor performance or processor power consumption governed by the level *LowPower.* The fifth instruction *SetAppPowerContext = initial_value*, sets the power consumption or processor performance to the initial or original value immediately prior to executing the return function. It will be appreciated from table 2 that the subroutine ZZ is designated as being a relatively low power, or low processor performance, routine and the processor power consumption or performance is amended accordingly.

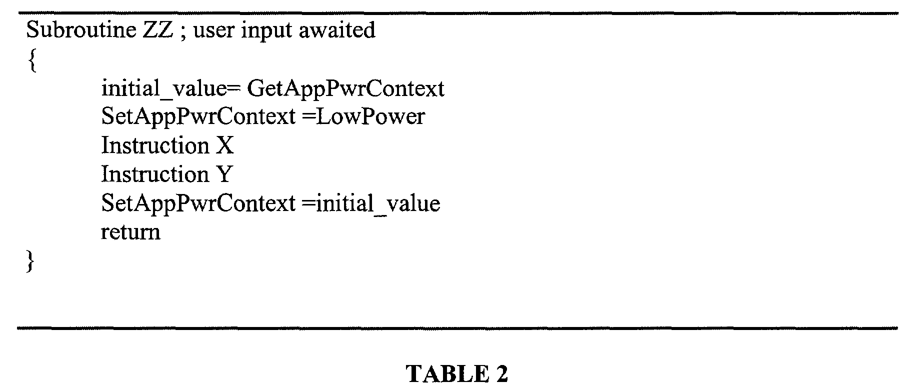

Table 3 illustrates a subroutine YY. The first instruction, *initial_value=GetAppPowerContext*, preserves the power context for the routine or application. A second instruction, *SetAppPowerContext=HighPower*, sets the processor power consumption or processor performance to be relatively high so that the subsequent instructions, *instruction X, instruction Y* and *SetAppPowerContext =* *initial_value*, are executed in a relatively fast, but power hungry, fashion. The fifth instruction, *SetAppPowerContext = initial_value* returns the processor power consumption or processor performance to be some other value governed by "*initial_value*". In the illustrated example the power contexts are "*LowPower*", "*Standard*" and "*HighPower*", correspond to relatively low process performance or power consumption, a modest processor performance or power consumption and a high processor performance or power consumption respectively.

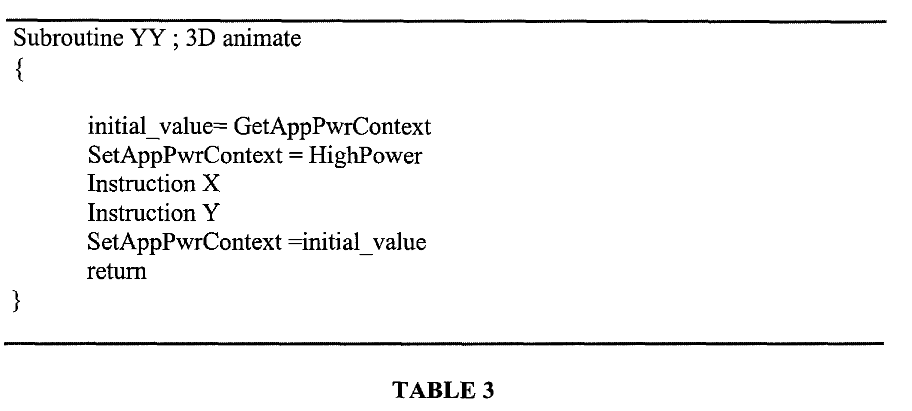

It will be appreciated that the illustrated example uses three power levels; namely; *LowPower*; *Standard* and *HighPower.*

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A data processing system comprising a processor operable at a selectable power consumption; a scheduler for assigning times slots to respective tasks of a plurality of tasks; the scheduler further comprising means for associating an associated level of power consumption of the processor with at least one of the respective tasks; and means for varying the power consumption of the processor during a respective time slot for the at least one task according to the associated level of power consumption of the at least one task.

2. A data processing system as claimed in claim 1, in which the processor is operable at the selectable power consumption by varying at least one of frequency of a processor clock signal and the power supply voltage of the processor.

3. A data processing system as claimed in any preceding claim, in which the respective tasks form part of the same application.

4. A data processing system as claimed in any preceding claim, in which the respective tasks form part of respective applications.

5. A data processing system comprising memory for storing an application and a processor for executing the stored application; the processor being operable at variable levels of power consumption; and a controller for establishing a respective level of power consumption for the processor according to data associated with the application.

6. A data processing system as claimed in claim 5, in which the associated data forms part of a header of the application and in which the controller reads the header when the application is loaded.

7. A data processing system as claimed in either of claims 5 and 6, in which the associated data forms part of a subroutine of the application.

8. A data processing system as claimed in any preceding claim, further comprising a clock generator for generating a clock signal to drive the processor and in which the controller comprises at least one of a voltage regulator for varying the voltage of a clock signal for driving the processor and a clock regulator for varying the frequency of the clock signal.

9. A data processing system as claimed in any preceding claim, in which the controller further comprising a scheduler for assigning a time slot to the application during which the application will be executed by the processor at the respective level of power consumption.

10. A data processing system as claimed in claim 9, in which the scheduler further comprises means for dynamically varying the power consumption of the processor.

11. A data processing system as claimed in claim 10, in which the means for dynamically varying the power consumption of the processor comprises means for dynamically varying the power consumption of at least one of an application or a thread within an application.
